# EUROPÄISCHE PATENTANMELDUNG

(11) **EP 2 660 964 A1**
(43) Veröffentlichungstag der Anmeldung: **06.11.2013**
(21) Anmeldenummer: 12166869.3
(22) Anmeldetag: 04.05.2012
(51) Int. Cl.: H02M 5/12, H02J 3/26

(54) **Stromversorgungsanordnung mit einer ersten und einer zweiten Stromversorgungseinrichtung, wobei die zweite Stromversorgungseinrichtung an die erste Stromversorgungseinrichtung angeschlossen ist**

(71) Anmelder: AEG Power Solutions B.V., 1161 AH Zwanenburg (NL)
(72) Erfinder: Wallmeier, Peter Dr., 59556 Lippstadt (DE); Paul, Wolfgang, 59581 Warstein-Belecke (DE)
(74) Vertreter: Manske, Jörg

(57) **Zusammenfassung**

Stromversorgungsanordnung mit

- p ersten Stromversorgungseinrichtungen (1) und wenigstens einer zweiten Stromversorgungseinrichtung (2),
- n ersten Transformatoren (T1) mit jeweils wenigstens einer Sekundärwicklung (2U, 3U, 2V, 3V, 2W, 3W) mit mehreren Anzapfungen (2U1 bis 2U5, 2UN, 3U1 bis 3U5, 3UN, 2V1 bis 2V6, 2VN, 3V1 bis 3V6, 3VN, 2W1 bis 2W6, 2WN, 3W1 bis 3W6, 3WN),
zur Versorgung von Lasten (L1 bis L6), insbesondere Polysiliciumstäben in einem Reaktor zu Herstellung von Polysilicium nach dem Siemensverfahren,

wobei die wenigstens eine zweite Stromversorgungseinrichtung (2) wenigstens einen Eingang (20) mit n Anschlüssen (201, 202, 203) und q Umformergruppen (21) zum Wandeln von n-Phasenwechselstrom in m-Phasenwechselstrom und einen Ausgang (23) mit q*m+1 Anschlüssen (231, 232, 233, 234, 235, 236, 237) hat,

wobei die Schaltungsanordnung p erste Schaltgruppen (3) aufweist, die jeweils einen Ausgang (31) mit bis zu q*m+1 Anschlüssen (311, 312, 313, 314, 315, 316, 317) aufweisen, an welche die Lasten (L1 bis L6) an die wenigstens eine zweiten Stromversorgungseinrichtung (2) anschließbar sind.

Mit einer zweiten Schaltgruppe (4) lassen sich die Anzapfungen (3UN, 3VN, 3WN) verbinden.

## Beschreibung

Die vorliegende Erfindung betrifft eine Stromversorgungsanordnung mit p ersten und wenigstens einer zweiten Stromversorgungseinrichtung,
- wobei die Stromversorgungsanordnung n Transformatoren aufweist,
- wobei jeder Transformator wenigstens eine Sekundärwicklung mit mehreren Anzapfungen aufweist,
- wobei wenigstens zwei erste Anzapfungen der Sekundärwicklung jedes Transformators in jeder ersten Stromversorgungseinrichtung über einen Leistungssteller an einem ersten Knoten miteinander verbunden sind,
- wobei der erste Knoten jeder ersten Stromversorgungseinrichtung zusammen mit einer Anzapfung für ein Bezugspotential der Sekundärwicklung des Transformators, an den die erste Stromversorgungseinrichtung angeschlossen ist, einen ersten Ausgang bildet, an welchen eine Reihenschaltung von Lasten, insbesondere Polysiliciumstäben in einem Reaktor zu Herstellung von Polysilicium nach dem Siemensverfahren, anschließbar sind,
- wobei die wenigstens eine zweite Stromversorgungseinrichtung einen Eingang mit n Anschlüssen und q Umformergruppen zum Wandeln von n-Phasenwechselstrom in m-Phasenwechselstrom hat und der Eingang der zweiten Stromversorgungseinrichtung mit der wenigstens einen Umformergruppe verbunden ist,
- wobei die wenigstens eine zweite Stromversorgungseinrichtung einen Ausgang mit q*m+1 Anschlüssen hat, die innerhalb der wenigstens einen zweiten Stromversorgungseinrichtung mit einem Ausgang der Umformergruppe verbunden sind,
- wobei die Schaltungsanordnung p erste Schaltgruppen aufweist, die jeweils einen Ausgang mit wenigstens q*m+1 Anschlüssen aufweisen, an welche die Lasten oder ein Teil der Lasten anschließbar sind, die in Reihe geschaltet an der ersten Stromversorgungseinrichtung anschließbar sind,
- die jeweils eine Gruppe von wenigstens q*m+1 steuerbaren Schaltmitteln aufweisen, wobei die Schaltmittel einer Gruppe in einem geschlossenen Zustand die Anschlüsse des Ausgangs der wenigstens einen zweiten Stromversorgungseinrichtung mit den Anschlüssen des Ausgangs verbinden, und
- die einen Steuereingang aufweisen, welcher mit Steueranschlüssen der Schaltmittel verbunden ist,
- wobei n, m, p und q natürliche Zahlen sind.

Unter einem Mehrphasenwechselstromsystem, auch unter einem Zweiphasenwechselstromsystem im Sinne der vorliegenden Anmeldung wird jedes Wechselstromsystem verstanden, bei dem mehrere Wechselströmen gleicher Frequenz vorliegen, welche zueinander konstante, gleiche Phasenwinkel aufweisen, die in der Summe 360° ergeben.

Eine derartige Stromversorgungsanordnung ist aus dem Dokument EP 2 388 236 A1 bekannt, wobei bei der in diesem Dokument offenbarten Stromversorgungsanordnung n=3, m=2, p=6 und q=2 ist.

Der Vorteil einer derartigen Stromversorgungsanordnung zur Versorgung eines Reaktors zur Herstellung von Polysilicium nach dem Siemens-Verfahren ist, dass die Polysiliciumstäbe, die in dem Reaktor angeordnet und elektrisch an die Stromversorgungsanordnung angeschlossen sind, sowohl von den ersten Stromversorgungseinrichtungen als auch von der zweiten Stromversorgungseinrichtung mit elektrischer Energie versorgt werden können.

Da die ersten Stromversorgungseinrichtungen zur Versorgung der Siliciumstäbe mit hohen Strömen bei niedrigen Spannungen ausgelegt sind und die zweite Stromversorgungseinrichtung zur Versorgung der Siliciumstäbe mit niedrigen Strömen bei hohen Spannungen ausgelegt sind, kann je nach Zustand, in dem sich die Siliciumstäbe befinden, die geeignete Stromversorgungseinrichtungen zur Versorgung der Siliciumstäbe ausgewählt werden.

In einer ersten Phase zum Beginn eines Abscheideprozesses, wenn die Siliciumstäbe als sogenannte Dünnstäbe vorliegen und einen sehr hohen ohmschen Widerstand aufweisen, ist es vorteilhaft, die Siliciumstäbe an die zweite Stromversorgungseinrichtung anzuschließen, bis der durch die hohe Spannung getriebene Strom die Siliciumstäbe so weit erwärmt hat, dass der ohmsche Widerstand sprunghaft absinkt, was auch als Zünden der Siliciumstäbe bezeichnet wird. Ist dieser Zustand erreicht, haben also die Siliziumstäbe einen geringen Widerstand, können in der an die erste Phase anschließenden zweiten Phase die ersten Stromversorgungseinrichtungen zur Versorgung der Silicumstäbe mit hohen Strömen bei niedrigen Spannungen benutzt werden. Die Spannung kann mittels der vorteilhaft vorgesehenen Spannungsfolgesteuerung so eingestellt werden, dass die in den Siliciumstäben umgesetzte Leistung während des Abscheideprozesses annährend konstant ist.

Da die zweite Stromversorgungseinrichtung nur während der ersten Phase bis zum Zünden benutzt wird, die zweite Phase im Vergleich zu der ersten Phase um ein Vielfaches länger ist, ist vorteilhaft, wie in der EP 2 388 236 A1 beschrieben, eine zweite Stromversorgungseinrichtung zu benutzen, an die nacheinander die verschiedenen Lasten oder Gruppen von Lasten angeschlossen werden können. Die Siliciumstäbe werden somit nicht gleichzeitig gezündet sondern nacheinander.

Die Verbindung der Lasten mit der zweiten Stromversorgungseinrichtung erfolgt dabei über die eingangs beschriebene Schaltmittelbaugruppe, die es ermöglicht, den Ausgang der zweiten Stromversorgungseinrichtung nacheinander mit den Ausgängen der Schaltmittelbaugruppe zu verbinden, an welche die Lasten, d.h. die Siliciumstäbe angeschlossen sind.

Dadurch konnte erreicht werden, dass eine zweite Stromversorgungseinrichtung für mehrere Gruppen Lasten benutzt werden kann, wobei jede Gruppe an eine erste Stromversorgungseinrichtung angeschlossen ist. Es ist also nicht für jede Gruppe von Lasten eine zweite Stromversorgungseinrichtung vorgesehen.

Dadurch konnte insbesondere auch der Aufwand von mehreren Mittelspannungstransformatoren auf einen Mittelspannungstransformator gesenkt werden, der die für die zweite Stromversorgungseinrichtung hinreichend hohe Spannung zur Verfügung stellt.

Der Erfindung lag nun die Aufgabe zugrunde, den Aufwand für die zweite Stromversorgungseinrichtung weiter zu reduzieren.

Diese Aufgabe wird erfindungsgemäß dadurch gelöst, dass jeder Anschluss des Eingangs der wenigstens einen zweiten Stromversorgungseinrichtung mit einer ersten Anzapfung einer Sekundärwicklung eines der Transformatoren verbunden ist und dass die Anzapfungen für ein Bezugspotential der Sekundärwicklungen der Transformatoren, an denen die Anschlüsse des Eingangs der wenigstens einen zweiten Stromversorgungseinrichtung angeschlossen sind, über steuerbare Schalter mit einander verbindbar sind.

Die durch die Erfindung erzielte Verbesserung besteht darin, dass die für die erste Stromversorgungseinrichtung vorhandenen Komponenten der Stromversorgungsanordnung auch für die zweite Stromversorgungseinrichtung benutzt werden. Dadurch können Komponenten, die bisher für den Anschluss der zweiten Stormversorgungseinrichtung an ein Stromnetz notwendig waren, eingespart oder zumindest kleiner dimensioniert werden. So können insbesondere die ersten Transformatoren oder Teile der ersten Transformatoren auch zur Versorgung der zweiten Stromversorgungseinrichtungen mit elektrischer Energie genutzt werden. War bisher ein Mittelspannungstransformator für die zweite Stromversorgungseinrichtung notwendig, kann dieser nun eingespart oder durch einen kleineren Transformator ersetzt werden.

Die ersten Transformatoren können primärseitig im Polygon geschaltet sein und an einem Mehrphasenwechselstromnetz mit n Phasen angeschlossen werden.

Primärwicklungen der ersten Transformatoren, an deren Sekundärwicklungen die Anschlüsse des Eingangs der wenigstens einen zweiten Stromversorgungseinrichtung angeschlossen sind, liegen vorzugsweise in verschiedenen Pfaden des Polygons. Dadurch kann eine gleichmäßige Belastung des Versorgungsnetzes erreicht werden.

Die ersten Transformatoren können eine oder mehr als eine Sekundärwicklung aufweisen.

Die Sekundärwicklungen der ersten Transformatoren, an denen die Anschlüsse des Eingangs der wenigstens einen zweiten Stromversorgungseinrichtung angeschlossen sind, können andere Sekundärwicklungen sein, als die die an die ersten Stromversorgungseinrichtungen angeschlossen sind. Für die Versorgung der zweiten Stromversorgungseinrichtung wären dann eigene Sekundärwicklungen vorgesehen, die nicht für die Versorgung der ersten Stromversorgungseinrichtungen verwendet werden. Für die Versorgung der ersten Stromversorgungseinrichtungen und der wenigstens einen zweiten Stromversorgungseinrichtung werden dann gemeinsam die Primärwicklungen der ersten Transformatoren genutzt.

Es ist aber auch möglich, dass an die Sekundärwicklungen der ersten Transformatoren, an denen die Anschlüsse des Eingangs der wenigstens einen zweiten Stromversorgungseinrichtung angeschlossen sind, auch erste Stromversorgungseinrichtungen angeschlossen sind. Für die Versorgung der ersten Stromversorgungseinrichtungen und der wenigstens einen zweiten Stromversorgungseinrichtung werden dann sowohl die Primärwicklungen als auch Sekundärwicklungen der ersten Transformatoren gemeinsam genutzt.

An alle Sekundärwicklungen der ersten Transformatoren können erste Stromversorgungseinrichtungen angeschlossen sein.

Die wenigstens eine Umformergruppe kann wenigstens einen oder mehrere zweite Transformatoren aufweisen. Die Umformergruppe kann zwei zweite Transformatoren aufweisen, die je eine Sekundärwicklung aufweisen. An den Sekundärwicklungen der beiden Transformatoren können gegenphasige Einphasenwechselspannungen anliegen, so dass an beiden Sekundärwicklungen gemeinsam eine Zweiphasenwechselspannung anliegt.

Ebenso ist es möglich, dass die zweiten Transformatoren m-Phasentransformatoren sind, an deren Sekundärwicklungen eine m-Phasenwechselspannung abgegriffen werden kann.

Die wenigstens eine Umformergruppe kann wenigstens einen oder mehrere Umrichter, insbesondere Frequenzumrichter aufweisen. Mittels der Umrichter einer Umformergruppe kann die n-phasige Spannung am Eingang der zweiten Stromversorgungseinrichtung in eine einphasige oder m-phasige Spannung umgeformt werden.

Die Stromversorgungsanordnung kann ein Steuergerät zur Steuerung der Leistungssteller in Spannungsfolgesteuerung aufweisen.

Die Stromversorgungsanordnung kann eine Steuergerät zur Steuerung der Schaltmittel der ersten Schaltgruppen aufweisen.

Die Stromversorgungsanordnung kann ferner eine Steuergerät zur Steuerung der Schaltmittel der zweiten Schaltgruppe aufweisen.

Die Steuergeräte zur Steuerung der Schaltmittel der ersten Schaltgruppen und der Schaltmittel der zweiten Schaltgruppe können so miteinander gekoppelt oder in einem Steuergerät vereinigt sein, dass die Schaltmittel der zweiten Schaltgruppe nur dann geschlossen sind, wenn Schaltmittel einer ersten Schaltgruppe zum Schließen angesteuert sind.

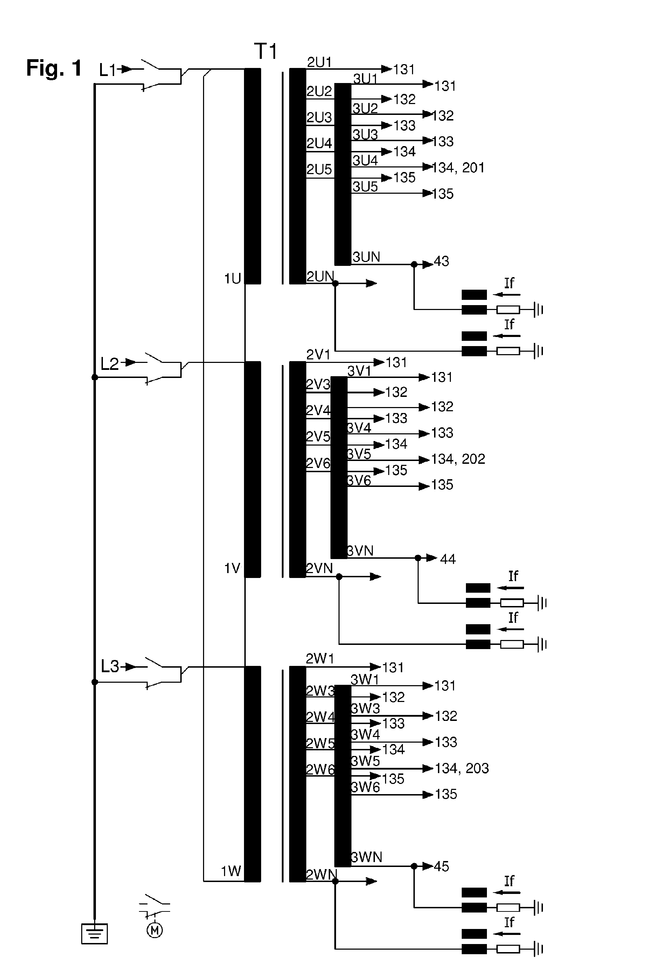

Weitere Merkmale der vorliegenden Erfindung werden anhand eines Beispiels einer erfindungsgemäßen Stromversorgungsanordnung unter Bezugnahme auf die beiliegenden Schaltbilder beschrieben. Darin zeigt
- Fig. 1: ein Schaltbild von ersten Transformatoren und deren Schaltung,
- Fig. 2: ein Schaltbild einer ersten Stromversorgungseinrichtung in einer ersten Variante, einer ersten Schaltgruppe in einer ersten Variante und von daran angeschlossenen Lasten,
- Fig. 3: ein Schaltbild einer ersten Stromversorgungseinrichtung in einer zweiten Variante, einer ersten Schaltgruppe in der ersten Variante und von daran angeschlossenen Lasten,
- Fig. 4: ein Schaltbild einer ersten Stromversorgungseinrichtung in einer dritten Variante, einer ersten Schaltgruppe in einer zweiten Variante und von daran angeschlossenen Lasten,

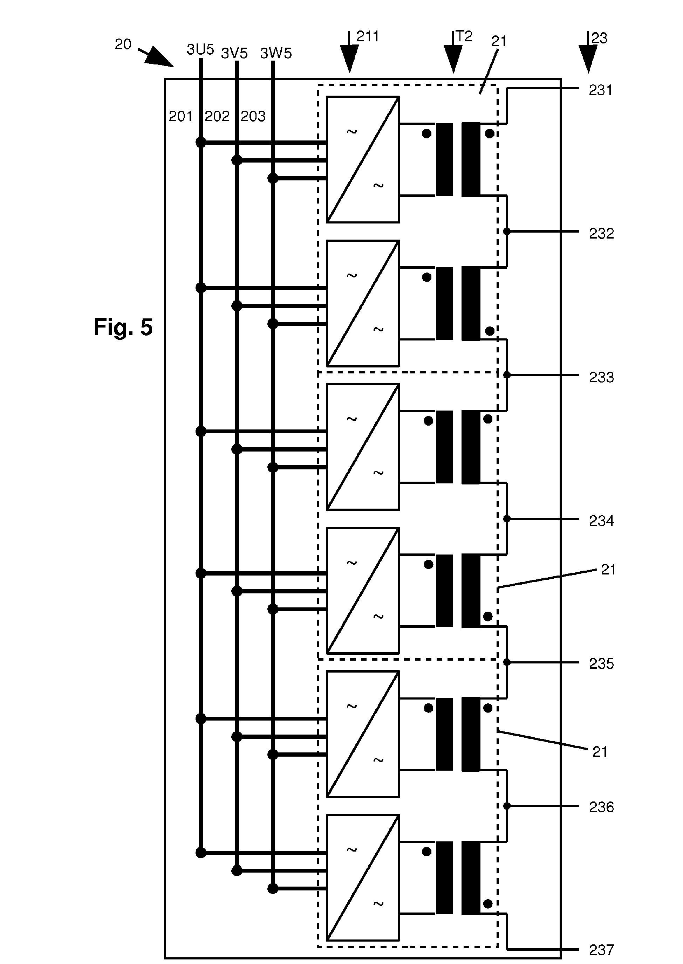

- Fig. 5: ein Schaltbild einer zweiten Stromversorgungseinrichtung und
- Fig. 6: ein Schaltbild einer zweiten Schaltgruppe.

Die erfindungsgemäße, anhand der Figuren erläuterte Stromversorgungsanordnung weist n=3 erste Transformatoren T1, p=6 erste Stromversorgungseinrichtungen 1, eine zweite Stromversorgungseinrichtung 2, p=6 erste Schaltgruppen 3 und eine zweite Schaltgruppe 4 auf.

Die Primärwicklungen 1 U, 1V, 1W der ersten Transformatoren T1 sind im Dreieck geschaltet und die Eckpunkte des Dreiecks sind über Lastschalter an drei Außenleiter L1, L2, L3 eines dreiphasigen Versorgungsnetzes angeschlossen. Die Lastschalter sind Schließer. Über Öffner sind die Eckpunkte des Dreiecks ebenfalls mit Erdpotential verbunden. Die Schließer und Öffner werden gleichzeitig von einem gemeinsamen Antrieb betätigt.

Die ersten Transformatoren T1 weisen jeweils zwei Sekundärwicklungen 2U, 3U, 2V, 3V, 2W, 3W auf. Jede Sekundärwicklung 2U, 3U, 2V, 3V, 2W, 3W hat sechs Anzapfungen oder Abgriffe 2U1 bis 2U5, 2UN, 3U1 bis 3U5, 3UN, 2V1 bis 2V5, 2VN, 3V1 bis 3V5, 3VN, 2W1 bis 2W5, 2WN, 3W1 bis 3W5, 3WN. Davon liegt an je einer Anzapfung 2UN, 3UN, 2VN, 3VN, 2WN, 3WN pro Sekundärwicklung 2U, 3U, 2V, 3V, 2W, 3W ein sekundärseitiges Bezugspotenzial an. An den übrigen fünf Anzapfungen 2U1 bis 2U5, 3U1 bis 3U5, 2V1 bis 2V5, 3V1 bis 3V5, 2W1 bis 2W5, 3W1 bis 3W5, nachfolgend auch als erste Anzapfungen bezeichnet, können gegenüber den Anzapfungen 2UN, 3UN, 2VN, 3VN, 2WN, 3WN für das Bezugspotential Spannungen abgegriffen werden.

Die Anzapfungen 2UN, 3UN, 2VN, 3VN, 2WN, 3WN für das Bezugspotential sind über Erdschlussdetektoren mit dem Erdpotential verbunden.

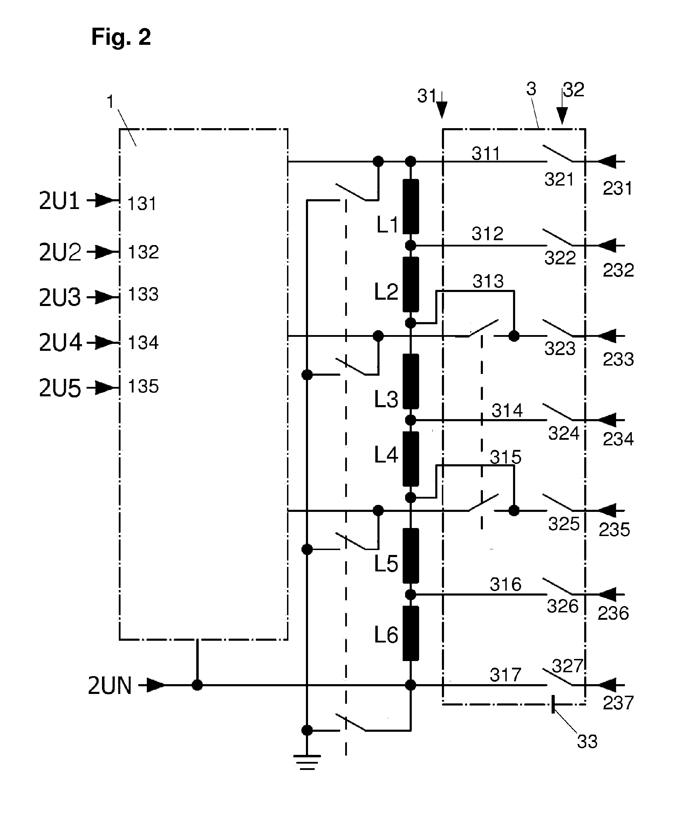

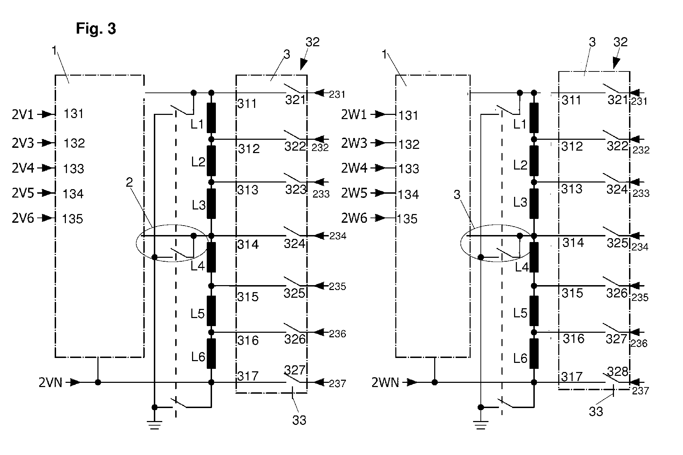

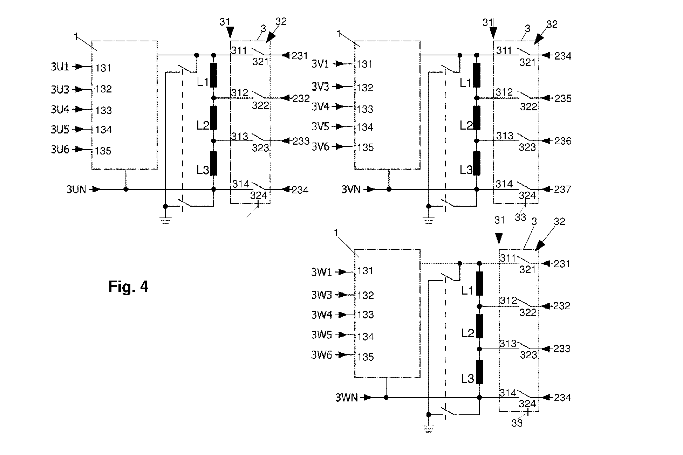

Die in den Figuren 2, 3 und 4 dargestellten ersten Stromversorgungseinrichtungen 1 sind ähnlich aufgebaut. Sie dienen zum einen der Versorgung der an sie angeschlossenen Lasten in einer Reihenschaltung. Diesbezüglich sind die ersten Stromversorgungseinrichtungen gleich aufgebaut. Mit den ersten Stromversorgungseinrichtungen gemäß der Fig. 2 und 3 können die Lasten aber auch gruppiert und die durch die Gruppierung entstandenen Gruppen von Lasten parallel geschaltet mit elektrischer Energie versorgt werden. Diesbezüglich unterscheiden sich die ersten Stromversorgungseinrichtungen gemäß Fig. 2, 3 und Fig. 4:
Während die Stromversorgungseinrichtungen gemäß Fig. 2 dazu ausgelegt sind, drei Gruppen von je zwei Lasten sowohl in Reihe geschaltet als auch parallel geschaltet mit elektrischer Energie zu versorgen, sind die in der Fig. 3 dargestellten Stromversorgungseinrichtungen dazu vorgesehen, zwei Gruppen von je drei Lasten sowohl in Reihe geschaltet als auch parallel geschaltet mit elektrischer Energie zu versorgen. Die dritte Variante der ersten Stromversorgungseinrichtung gemäß Fig. 4 ist schließlich nur dazu ausgelegt, drei Lasten in Reihe geschaltet mit elektrischer Energie zu versorgen.

Jede erste Stromversorgungseinrichtung 1 weist Anschlüsse 131, 132, 133, 134, 135 auf, die mit den ersten Anzapfungen 2U1 bis 2U5, 3U1 bis 3U5, 2V1 bis 2V5, 3V1 bis 3V5, 2W1 bis 2W5, 3W1 bis 3W5 einer Sekundärwicklung 2U, 3U, 2V, 3V, 2W, 3W eines ersten Transformators T1 verbunden sind. Die Anschlüsse 131, 132, 133, 134, 135 sind innerhalb der ersten Stromversorgungseinrichtung über Leistungssteller 11 mit einem Knoten 12 verbunden. Dieser Knoten 12 bildet zusammen mit der Anzapfung 2UN, 3UN, 2VN, 3VN, 2WN, 3WN für das Bezugspotential der Sekundärwicklung 2U, 3U, 2V, 3V, 2W, 3W, mit der die Anschlüsse 131, 132, 133, 134, 135 verbunden sind, einen Ausgang der ersten Stromversorgungseinrichtung 1. An diesen Ausgang der ersten Stromversorgungseinrichtung 1 ist eine Reihenschaltung von Lasten angeschlossen.

Zum Wechsel zwischen einer Parallelschaltung und einer Reihenschaltung der Lasten weisen die ersten Stromversorgungseinrichtungen in der ersten Variante (Fig. 2) und in der zweiten Variante (Fig. 3) verschiedene Leitungen und Schaltmittel auf, die in der Fig. 2 und der Fig. 3 dargestellt aber an dieser Stelle nicht weiter erläutert werden, was bereits ausführlich in den vorveröffentlichten Dokumenten beschrieben worden ist.

Die Reihenschaltungen aus den Lasten L1 bis 6 (Fig. 2 und Fig. 3) bzw. L1 bis L3 (Fig. 4) sind, wie bereits ausgeführt wurde, an den Ausgang einer der ersten Stromversorgungseinrichtungen angeschlossen. Jede einzelne Last L1 bis L6 bzw. L1 bis L3 ist zugleich auch an eine erste Schaltgruppe 3 angeschlossen.

Die ersten Schaltgruppen 3 weisen in den ersten Varianten (Fig. 2 und Fig. 3) einen Ausgang 31 mit q*m+1, d.h., wenn m=2 und q=3 ist, mit sieben Anschlüssen 311, 312, 313, 314, 315, 316, 317 auf. An diese Anschlüsse 311, 312, 313, 314, 315, 316, 317 sind die Lasten L1 bis L6 angeschlossen. Jede Last ist mit zwei der Anschlüsse 311, 312, 313, 314, 315, 316, 317 verbunden, über die sie mit Strom aus der zweiten Stromversorgungseinrichtung versorgt werden kann.

Die ersten Schaltgruppen 3 weisen jeweils eine Gruppe 31 von maximal q*m+1 steuerbaren Schaltmitteln auf. In der ersten Variante der ersten Schaltgruppe weisen die ersten Schaltgruppen sieben steuerbaren Schaltmitteln 321, 322, 323, 324, 325, 326, 327 auf. Die Schaltmittel 321, 322, 323, 324, 325, 326, 327 einer Gruppe 32 verbinden in einem geschlossenen Zustand die Anschlüsse 311, 312, 313, 314, 315, 316, 317 des Ausgangs 31 mit Anschlüssen 24, 25, 26, 27, 28, 29, 2A des Ausgangs der zweiten Stromversorgungseinrichtung 2.

Die ersten Schaltgruppen 3 in der zweiten Variante (Fig. 4) unterscheiden sich von denen in der ersten Variante (Fig. 2 und 3) dadurch, dass der Ausgang nicht sieben sondern nur vier Anschlüsse 311, 312, 313, 314 und die Gruppe der Schaltmittel nur vier Schaltmittel 321, 322, 323, 324 aufweist. An diese vier Anschlüsse 311, 312, 313, 314 sind die drei Lasten L1 bis L3 angeschlossen, die auch an die erste Stromversorgungseinrichtung 1 in der zweiten Variante angeschlossen sind.

Die steuerbaren Schaltmittel 321, 322, 323, 324, 325, 326, 327 beider Varianten von ersten Schaltgruppen haben Steueranschlüsse, die über einen Steuereingang 33 der ersten Schaltgruppe 3 mit einem Steuergerät (nicht dargestellt) verbunden sind.

Das Steuergerät zum Steuern der ersten Schaltgruppen steuert alle ersten Schaltgruppen. Es trägt dafür Sorge, dass, wenn eine Versorgung mit elektrischer Energie aus der zweiten Stromversorgungseinrichtung erfolgen soll, die Schaltmittel 321, 322, 323, 324, 325, 326, 327 vorzugsweise einer einzigen ersten Schaltgruppe 3 geschlossen sind.

Die zweite Stromversorgungseinrichtung 2 weist einen Eingang 20 mit n=3 Anschlüssen 201, 202, 203 auf, von denen der Anschluss 201 mit dem Anschluss 3U4, der Anschluss 202 mit dem Anschluss 3V4 und der dritte Anschluss 203 mit einem Anschluss 3W4 verbunden ist. Die zweite Stromversorgungseinrichtung 2 weist q=3 Umformergruppen 21 auf. Diese Umformergruppen 21 sind mit den Anschlüssen 201, 202, 203 verbunden, d.h. die Umformergruppen 21 werden aus den Sekundärwicklungen 3U, 3V und 3W mit dreiphasiger Spannung versorgt. In den Umformergruppen 21 wird die dreiphasige Spannung in eine m-phasige Spannung gewandelt, wobei m=2 ist. An den Ausgängen der drei Umformergruppen 21 steht also ein zweiphasige Spannung an. Die Phase beträgt 180°.

Jede Umformergruppe 21 weist zwei eingangseitig parallel geschaltete Umrichter 211 auf, die eingangseitig mit den Anschlüssen 201, 202, 203 des Eingangs 20 der zweiten Stromversorgungseinrichtung 2 verbunden sind. Die Umrichter 211 wandeln die dreiphasige Spannung in eine Einphasenwechselspannung um. Die Umformergruppen 21 weisen ferner zwei zweite Transformatoren T2 auf. Diese transformieren die Einphasenwechselspannung am Ausgang des Umrichters 211. Primärwicklungen der beiden zweiten Transformatoren T2 einer Umformergruppe 21 sind gleichsinnig, Sekundärwicklungen der beiden Transformatoren T2 dagegen gegensinnig gewickelt. Dadurch entstehen an den Ausgängen der beiden zweiten Transformatoren T2 gegenphasige Spannungen.

Sekundärseitige Anschlüsse der zweiten Transformatoren T2 sind in zweiten Knoten 22 so miteinander verbunden, dass über die Sekundärwicklungen 2 im Knoten 22 miteinander verbundene zweite Transformatoren T2 keine Spannung abfällt.

Zwei zweite Transformatoren T2 sind mit nur einem anderen zweiten Transformator T2 verbunden. Diese sind also mit nur einem zweiten Knoten 22 verbunden und je einer der sekundärseitigen Anschlüsse dieser beiden Transformatoren T2 ist nicht mit einem Knoten 22 verbunden.

Diese nicht mit einem zweiten Knoten 22 verbundenen Anschlüsse der Sekundärseiten der zweiten Transformatoren T2 sowie die zweiten Knoten 22 sind mit Anschlüssen 231, 232, 234, 235, 236, 237 des Ausgangs 23 der zweiten Stromversorgungseinrichtung 2 verbunden, an denen die ersten Schaltgruppen 3 angeschlossen sind.

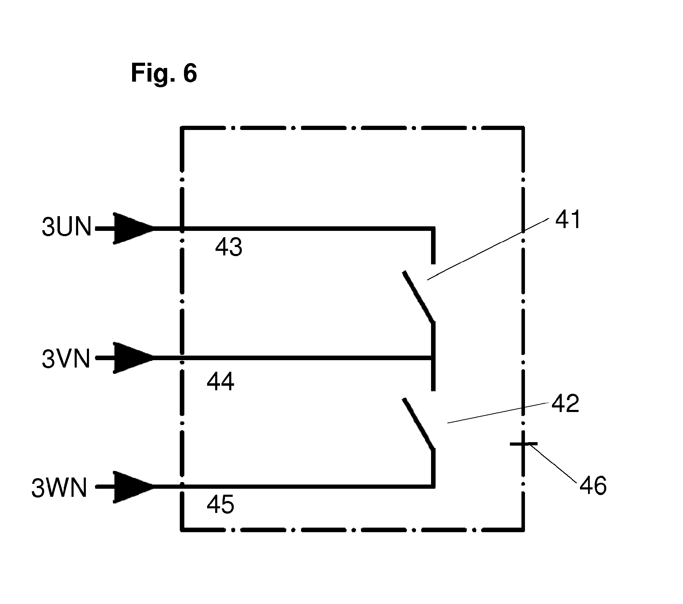

Die zweite Schaltgruppe 4 (Fig. 6) weist drei Anschlüsse 43, 44, 45 auf, die mit den Anzapfungen 3UN, 3VN, 3WN verbunden sind. Die zweite Schaltmittelgruppe 4 weist ferner zwei gesteuerte Schaltmittel 41 , 42 auf, mit denen die Anschlüsse 43, 44, 45 miteinander verbunden werden können. Ebenso ist ein Steuereingang 46 vorgesehen, über welchen die Schaltmittel 41 , 42 von einem Steuergerät (nicht dargestellt) angesteuert werden können. Sofern die zweite Stromversorgungseinrichtung 2 zur Versorgung der Lasten mit elektrischer Energie herangezogen werden soll, müssen die Schaltmittel 41, 42 zum Schließen angesteuert werden. Über die Schaltmittel 41 , 42 wird dann ein Sternpunkt gebildet, der einen Stromfluss von den ersten Transformatoren T1 zu der zweiten Stromversorgungseinrichtung 2 ermöglicht.

## Patentansprüche

1. Stromversorgungsanordnung mit p ersten
Stromversorgungseinrichtungen (1) und wenigstens einer zweiten Stromversorgungseinrichtung (2),
- wobei die Stromversorgungsanordnung n erste Transformatoren (T1) aufweist,
- wobei jeder erste Transformator (T1) wenigstens eine Sekundärwicklung (2U, 3U, 2V, 3V, 2W, 3W) mit mehreren Anzapfungen (2U1 bis 2U5, 2UN, 3U1 bis 3U5, 3UN, 2V1 bis 2V5, 2VN, 3V1 bis 3V5, 3VN, 2W1 bis 2W5, 2WN, 3W1 bis 3W5, 3WN) aufweist,
- wobei wenigstens zwei erste Anzapfungen (2U1 bis 2U5, 3U1 bis 3U5, 2V1 bis 2V5, 3V1 bis 3V5, 2W1 bis 2W5, 3W1 bis 3W5) der wenigstens einen Sekundärwicklung (2U, 3U, 2V, 3V, 2W, 3W) jedes ersten Transformators (T1) in jeder ersten Stromversorgungseinrichtung (1) über einen Leistungssteller (11) an einem ersten Knoten (12) miteinander verbunden sind,
- wobei der erste Knoten (12) jeder ersten
Stromversorgungseinrichtung (1) zusammen mit einer Anzapfung (2UN, 3UN, 2VN, 3VN, 2WN, 3WN) für ein Bezugspotential der wenigstens einen Sekundärwicklung (2U, 3U, 2V, 3V, 2W, 3W) des ersten Transformators (T1), an den die erste Stromversorgungseinrichtung (1) angeschlossen ist, einen ersten Ausgang bildet, an welchen eine Reihenschaltung von Lasten (L1 bis L6), insbesondere Polysiliciumstäben in einem Reaktor zu Herstellung von Polysilicium nach dem Siemensverfahren, anschließbar sind,
- wobei die wenigstens eine zweite
Stromversorgungseinrichtung (2) wenigstens einen Eingang (20) mit n Anschlüssen (201, 202, 203) und q Umformergruppen (21) zum Wandeln von n-Phasenwechselstrom in m-Phasenwechselstrom hat und der Eingang mit den q Umformergruppen (21) verbunden ist,
- wobei die wenigstens eine zweite
Stromversorgungseinrichtung (2) einen Ausgang (23) mit q*m+1 Anschlüssen (231, 232, 233, 234, 235, 236, 237) hat, die innerhalb der wenigstens einen zweiten Stromversorgungseinrichtung (2) mit Anschlüssen der q Umformergruppen (21) verbunden sind,
- wobei die Schaltungsanordnung p erste Schaltgruppen (3) aufweist,
- die jeweils einen Ausgang (31) mit bis zu q*m+1 Anschlüssen (311, 312, 313, 314, 315, 316, 317) aufweisen, an welche die Lasten (L1 bis L6) oder ein Teil der Lasten anschließbar sind, die in Reihe geschaltet an der ersten Stromversorgungseinrichtung (1) anschließbar sind,
- die jeweils eine Gruppe (32) von steuerbaren Schaltmitteln (321, 322, 323, 324, 325, 326, 327) aufweisen, wobei die Schaltmittel (321, 322, 323, 324, 325, 326, 327) einer ersten Schaltgruppe (3) in einem geschlossenen Zustand die Anschlüsse (231, 232, 233, 234, 235, 236, 237) des Ausgangs (23) der wenigstens einen zweiten Stromversorgungseinrichtung (2) mit den Anschlüssen (311, 312, 313, 314, 315, 316, 317) des Ausgangs (31) der gleichen ersten Schaltgruppe (3) verbinden, und
- die einen Steuereingang (33) aufweisen, welcher mit Steueranschlüssen der Schaltmittel (321, 322, 323, 324, 325, 326, 327) verbunden ist,
- wobei n, m, p und q natürliche Zahlen sind,
**dadurch gekennzeichnet,**
- **dass** jeder Anschluss (201, 202, 203) des Eingangs (20) der wenigstens einen zweiten Stromversorgungseinrichtung (2) mit einer ersten Anzapfung (3U4, 3V4, 3W4) einer Sekundärwicklung (3U, 3V, 3W) eines der ersten Transformatoren (T1) verbunden ist und
- **dass** die Anzapfungen (3UN, 3VN, 3WN) für ein Bezugspotential der Sekundärwicklungen (3U, 3V, 3W) der ersten Transformatoren (T1), an denen die Anschlüsse (201, 202, 203) des Eingangs (20) der wenigstens einen zweiten Stromversorgungseinrichtung (2) angeschlossen sind, über steuerbare Schaltmittel (41, 42) einer zweiten Schaltgruppe (4) mit einander verbindbar sind.

2. Stromversorgungsanordnung nach Anspruch 1, **dadurch gekennzeichnet, dass** die ersten Transformatoren (T1) primärseitig im Polygon geschaltet und an einem Mehrphasenwechselstromnetz mit n Phasen anschließbar sind,

3. Stromversorgungsanordnung nach Anspruch 2, **dadurch gekennzeichnet, dass** Primärwicklungen (1 U, 1 V, 1W) der ersten Transformatoren (T1), an deren Sekundärwicklungen (3U, 3V, 3W) die Anschlüsse (21, 22, 23) des Eingangs der wenigstens einen zweiten Stromversorgungseinrichtung (2) angeschlossen sind, in verschiedenen Pfaden des Polygons liegen.

4. Stromversorgungsanordnung nach einem der Ansprüche 1 bis 3, **dadurch gekennzeichnet, dass** die ersten Transformatoren (T1) mehr als eine Sekundärwicklung (2U, 3U, 2V, 3V, 2W, 3W) aufweisen.

5. Stromversorgungsanordnung nach Anspruch 3 und 4, **dadurch gekennzeichnet, dass** die Sekundärwicklungen der ersten Transformatoren, an denen die Anschlüsse des Eingangs der wenigstens einen zweiten Stromversorgungseinrichtung angeschlossen sind, andere Sekundärwicklungen sind als die die an die ersten Stromversorgungseinrichtungen angeschlossen sind.

6. Stromversorgungsanordnung nach Anspruch 3 und 4, **dadurch gekennzeichnet, dass** an die Sekundärwicklungen (3U, 3V, 3W) der ersten Transformatoren (T1), an denen die Anschlüsse (21, 22, 23) des Eingangs der wenigstens einen zweiten Stromversorgungseinrichtung (2) angeschlossen sind, auch erste Stromversorgungseinrichtungen (1) angeschlossen sind.

7. Stromversorgungsanordnung nach Anspruch 6, **dadurch gekennzeichnet, dass** an alle Sekundärwicklungen (2U, 3U, 2V, 3V, 2W, 3W) der ersten Transformatoren (T1) erste Stromversorgungseinrichtungen (1) angeschlossen sind.

8. Stromversorgungsanordnung nach einem der Ansprüche 1 bis 7, **dadurch gekennzeichnet, dass** die wenigstens eine Umformergruppe (20) wenigstens einen oder mehrere zweite Transformatoren (T2) aufweist.

9. Stromversorgungsanordnung nach einem der Ansprüche 1 bis 8, **dadurch gekennzeichnet, dass** die wenigstens eine Umformergruppe (20) wenigstens einen oder mehrere Umrichter (201) aufweist.

10. Stromversorgungsanordnung nach einem der Ansprüche 1 bis 9, **dadurch gekennzeichnet, dass** die Stromversorgungsanordnung ein Steuergerät zur Steuerung der Leistungssteller (11) der ersten Stromversorgungseinrichtungen in Spannungsfolgesteuerung aufweist.

11. Stromversorgungsanordnung nach einem der Ansprüche 1 bis 10, **dadurch gekennzeichnet, dass** die Stromversorgungsanordnung ein Steuergerät zur Steuerung der Schaltmittel (321, 322, 323, 324, 325, 326, 327) der ersten Schaltgruppen (3) aufweist.

12. Stromversorgungsanordnung nach einem der Ansprüche 1 bis 1 1 , **dadurch gekennzeichnet, dass** die Stromversorgungsanordnung ein Steuergerät zur Steuerung der Schaltmittel (41, 42) der zweiten Schaltgruppe (4) aufweist.

13. Stromversorgungsanordnung nach Anspruch 11 und 12, **dadurch gekennzeichnet, dass** das Steuergerät zur Steuerung der Schaltmittel (321, 322, 323, 324, 325, 326, 327) der ersten Schaltgruppen (3) und der Schaltmittel (41, 42) der zweiten Schaltgruppe (4) so miteinander gekoppelt oder in einem Steuergerät vereinigt sind, dass die Schaltmittel (41, 42) der zweiten Schaltgruppe (4) nur dann geschlossen sind, wenn die Schaltmittel (321, 322, 323, 324, 325, 326, 327) einer ersten Schaltgruppe (3) zum Schließen angesteuert sind.
